(19) Europäisches Patentamt
European Patent Office
Office européen des brevets

(11) **EP 2 546 199 A1**

(12) **EUROPEAN PATENT APPLICATION**

(43) Date of publication:
**16.01.2013 Bulletin 2013/03**

(51) Int Cl.:
***C01G 49/06*** *(2006.01)*

(21) Application number: **11174061.9**

(22) Date of filing: **14.07.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Université Catholique de Louvain
1348 Louvain-La-Neuve (BE)**

(72) Inventors:
• **Nizet, Yannick
4287 Lincent (BE)**

• **Gaigneaux, Eric
1450 Chastre (BE)**
• **Ghazzal, Mohamed Nawfal
Casablanca (MA)**

(74) Representative: **Bounaga, Sakina et al
De Clercq & Partners cvba
Edgard Gevaertdreef 10a
9830 Sint-Martens-Latem (BE)**

(54) **Solid iron oxide support for isolation of microorganisms**

(57)     The present invention concerns an iron oxide characterized by:
an X-ray diffraction pattern which has no reflection peak at the angle located in the 21 to 28° (2 theta) range, and has only one reflection peak (111) at the angle located in the 15 to 20° (2 theta) range; and a Raman spectrum comprising a Raman spectral band centered at about $1400 \pm 4$ cm$^{-1}$, and bands present in the areas at 300-420, 430-570, 600-770 $\pm$ 4 cm$^{-1}$. It finds utility in the isolation of microorganisms, particularly the selective isolation of bacteria and yeast.

EP 2 546 199 A1

Printed by Jouve, 75001 PARIS (FR)

**Description**

**FIELD OF THE INVENTION**

The present invention relates to a solid support based on iron oxide that binds rapidly to microorganisms, especially bacteria and yeast to form a complex, which complex has a magnetic property, permitting the bound bacteria or yeast to be isolated by a magnetic field. It also relates to a kit and a method for isolation and detection of microorganisms.

**BACKGROUND OF THE INVENTION**

The isolation of microorganisms, particularly intact bacteria or yeast from a sample is often necessary for analysis.

The use of magnetic particles for the isolation of microorganisms is well known in the art, however, there are associated problems, namely that the reaction between the particles and the microorganism typically requires a coating of the particle with a ligand specific to an external element (*e.g.* receptor, carbohydrate, protein) of the microorganism. When the coating is a biological compound such as an antibody or protein, the particle must be stored under suitable conditions, thereby increasing costs of transport, and storage. In addition, such particles would be unsuitable in uncontrolled media, such as basic, acid or denaturing media. The use of uncoated magnetic particles of magnetite is also described in the art for the isolation of bacteria, however, the reaction between the particle and microorganism is not immediate. For example, the bacterial isolation method from a sample typically requires a 3 hours incubation to bind bacteria to the magnetic particle. This delay is a significant problem for the detection of microorganisms in a clinical sample, where expedient analysis is desired.

It is an aim of the present invention to provide a new solid support for the isolation of microorganisms that overcomes the problems of the art. It is a further aim to provide a process for its preparation, and method for the isolation and analysis of microorganisms, and a kit therefor.

**SUMMARY OF THE INVENTION**

According to a first aspect of the present invention, an iron oxide is provided. The iron oxide is characterized by: an X-ray diffraction pattern which has no reflection peak at the angle located in the 21 to 28° (2 theta) range, and has only one reflection peak (111) at the angle located in the 15 to 20° (2 theta) range; and a Raman spectrum comprising a Raman spectral band centered at about $1400 \pm 4$ cm$^{-1}$ , and bands present in the areas at 300-420, 430-570, 600-770 $\pm$ 4 cm$^{-1}$.

The present inventors have found that this iron oxide binds rapidly to microorganisms, especially bacteria and yeast to form a complex, which complex has a magnetic property, permitting the bound bacteria or yeast to be isolated by a magnetic field.

According to a second aspect, the present invention also concerns the use of an iron oxide according to the first aspect of the invention, for the isolation of bacterial and/or yeast cells from a sample.

According to a third aspect, the present invention also concerns a method for the isolation of a bacterial and/or yeast cells from a sample, comprising the steps:

(a) contacting the sample with an iron oxide according to the first aspect of the invention, in liquid medium;

(b) separating the iron oxide from the sample using magnetic manipulation; and

(c) optionally eluting the cells from the iron oxide,

thereby isolating the bacterial and/or yeast cells from a sample.

According to a fourth aspect, the present invention also concerns a method for removing bacteria or yeast from a liquid, comprising the steps of:

(a) contacting the liquid with an iron oxide according to the first aspect of the invention;

(b) separating the iron oxide from the liquid using magnetic manipulation;

thereby removing the bacterial and/or yeast cells from said liquid .

This method can be used to purify a liquid.

The independent and dependent claims set out particular and preferred features of the invention. Features from the dependent claims may be combined with features of the independent or other dependent claims as appropriate.

The above and other characteristics, features and advantages of the present invention will become apparent from the following detailed description, taken in conjunction with the accompanying drawings, which illustrate, by way of examples, the principles of the invention. The reference figures quoted below refer to the attached drawings.

**FIGURES**

Figure 1 represents Raman spectra of commercial magnetite and maghemite purchased from Sigma-Aldrich and of an iron oxide according to an embodiment of the invention.

Figure 2 represents XRD patterns of the iron oxide nanoparticles according to an embodiment of the invention and commercial magnetite and maghemite purchased from Sigma-Aldrich.

Figure 3 represents infrared spectra for the iron oxide of the invention according to an embodiment of the invention, magnetite and maghemite (Sigma-Aldrich).

**DETAILED DESCRIPTION OF THE INVENTION**

Unless defined otherwise, all technical and scientific terms used herein have the same meaning as is commonly understood by one of skill in the art. All references cited in the present specification are hereby incorporated by reference in their entirety. In particular, the teachings of all references herein specifically referred to are incorporated by reference. It is also to be understood that the terminology used herein is not intended to be limiting, since the scope of the present invention will be limited only by the appended claims.

The articles "a" and "an" are used herein to refer to one or to more than one, i.e. to at least one of the grammatical object of the article. By way of example, "a sample" means one sample or more than one sample.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all integer numbers and, where appropriate, fractions subsumed within that range (*e.g.* 1 to 5 can include 1, 2, 3, 4 when referring to, for example, a number of samples, and can also include 1.5, 2, 2.75 and 3.80, when referring to, for example, concentrations). The recitation of end points also includes the end point values themselves (*e.g.* from 1.0 to 5.0 includes both 1.0 and 5.0)

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

The present invention relates to an iron oxide particle which is characterized by: an X-ray diffraction pattern which has no reflection peak at the angle located in the 21 to 28° (2 theta) range, and has only one reflection peak (111) at the angle located in the 15 to 20° (2 theta) range; and a Raman spectrum comprising a Raman spectral band centered at about $1400 \pm 4$ cm$^{-1}$ , and bands present in the areas at 300-420, 430-570, 600-770 $\pm$ 4 cm$^{-1}$.

Preferably, the iron oxide is further characterized by an IR spectrum comprising three broad maxima at around 634, 557 and 438 cm$^{-1}$ with a shoulder around 694 cm$^{-1}$.

Preferably, the iron oxide is $Fe_2O_3$, preferably nano particles of $Fe_2O_3$, preferably gamma-$Fe_2O_3$, yet more preferably nano particles of gamma-$Fe_2O_3$.

Preferably the iron oxide according to the invention is formed by contacting iron (II) and iron (III) salts in an aqueous solution in the presence of oxidizing atmosphere and subsequently adding a base in the presence of oxidizing atmosphere. Preferably, the iron oxide is obtained by a process comprising the steps of: reacting iron (II) salt with iron (III) salt, in an aqueous solvent, in the presence of air or molecular oxygen, and subsequently adding a base to the reaction mixture, in the presence of air or molecular oxygen, and isolating the iron oxide formed.

The iron (II) salts may be any known in the art, including, but not limited to, iron (II) sulfate, iron (II) chloride, iron (II) ammonium sulfate, preferably iron (II) sulfate or iron (II) chloride. The iron (III) salts may be any known in the art, and which are soluble in aqueous solution, and including, but not limited to, iron (III) sulfate, iron (III) chloride, iron (III) nitrate, iron (III) ammonium sulfate, preferably iron (III) sulfate.

Preferably the molar ratio of iron (II) : iron (III) is between 1:1 and 4 : 1. For example, the molar ratio can be 2: 1, 3:1; 4:1.

Preferably the process comprises reacting iron (II) sulfate with iron (III) sulfate, in an aqueous solvent, preferably water, in the presence of air or molecular oxygen, and subsequently adding a base, preferably a strong base, to the reaction mixture, in the presence of air or molecular oxygen, and isolating the iron oxide formed.

The iron oxide as solid support may take the form of well known supports or matrices which are currently widely used or proposed for immobilization, separation etc. It may take the form of a particle, bead, powder, sheet, gel, filter, membrane, fiber, capillary, or a microtitre strip, tube, plates or wells etc. It preferably takes the form of a particle, bead or powder. Preferably the iron oxide takes the form of a nano particle.

As used throughout this application, "nano-particles" or "nano-sized particles" are particles having an average diameter of between 1 nanometer and 100 nanometers, preferably between 1 nanometers and 50 nanometers, preferably between 1 nanometers and 30 nanometers, for example of less than 20 $\mu$m. Particle size can be measured using laser scattering.

The solid support provides for an efficient capture of bacterial or yeast cells in a sample. It is preferably formulated as particles, beads, in granulated or powered form to increase surface area available for capture. The solid support may be used in batch mode which takes advantage of the magnetic property, or in a flow-through mode (*e.g.* disposed in a cartridge or column). After contact with the sample in the presence of liquid, the solid support may be separated from the liquid by application of magnetic field to the side of the holding container, thereby isolating bacterial or yeast cells from the sample. The cells may be released from the solid support or the solid-support-cellular complex used in further steps such as PCR, analysis or propagation.

According to embodiments, the iron oxide may be coated. The iron oxide may be coated with a functionalized surface. Functionalized coated solid support may be prepared by modification of the support according to US patents 4,336,173, 4,459,378 and 4,654,267. Thus, the iron oxide may be coated with different types of functionalized compound, for example positively or negatively charged, hydrophilic or hydrophobic. According to embodiments, the iron oxide may be coated with a silane compound. Preferably the iron oxide may be coated with silane compound exhibiting positive charges, such as alkylsilane, aminoalkyl silane, alkoxysilane, amino silane, aminoalkoxy silane. Preferably the silane is N-(2-aminoethyl)-3-aminopropyl-trimethoxysilane. The effect of the silane coating is an increase in the affinity for gram-negative bacteria.

In other embodiment, the iron oxide particles may comprise a ligand immobilized thereon, which ligand is capable of binding to a binding partner. The ligand may be, for example, an antibody, biotin or streptavidin, and the binding partners antigen, streptavidin or biotin respectively. Preferably the invention encompasses iron oxide according to a first or further aspects of the invention to which a ligand such an antibody, streptavidin, or biotin is immobilized. For example, the immobilized ligand may be an antibody directed against a toxin secreted by the captured organism, such as for example an anti-*Clostridium* toxin A or an anti-*Bacillus anthracis* toxin PA. Such antibody may be used as a detection test when used together with a second labeled antibody also directed against the captured toxin. In other embodiments, the ligand may be capable of binding DNA, which may be a oligomer specific for a particular DNA sequence of the microorganism, or a general DNA capturing compound such as DNA-binding proteins, heparin, intercalating dyes, or leucine zippers.

The iron oxide particles may also be coated with moieties which assist in the binding of cells, for example carbohydrates, proteins or protein fragments or polypeptides which are bound non-specifically by cells. Thus, for example, an iron oxide coated with carbohydrates may bind cells non-specifically through receptors on the cell surface. Techniques for immobilizing carbohydrates and other proteins or polypeptides on solid surfaces are well known in the art.

In a further aspect, the present invention, also encompasses an iron oxide as described herein formed by the reaction iron (II) and iron (III) salts in an aqueous solution in an oxidizing environment, and subsequently by the addition of a base in an oxidizing environment. In a further aspect, the present invention, also encompasses a process for preparing iron oxide, comprising the steps of reacting iron (II) salt with iron (III) salt, in an aqueous solvent, in the presence of air or molecular oxygen, and subsequently adding a base to the reaction mixture, in the presence of air or molecular oxygen, and isolating the iron oxide formed.

The iron (II) salts may be any known in the art, including, but not limited to, iron (II) sulfate, iron (II) chloride, iron (II) ammonium sulfate, preferably iron (II) sulfate or iron (II) chloride. The iron (III) salts may be any known in the art, and which are soluble in aqueous solution, and including, but not limited to, iron (III) sulfate, iron (III) chloride, iron (III) nitrate, iron (III) ammonium sulfate, preferably iron (III) sulfate. Preferably, the iron (II) salt is selected from iron (II) sulfate, iron (II) chloride, or iron (II) ammonium sulfate, and the iron (III) salt is selected from iron (III) sulfate, iron (III) chloride, iron (III) nitrate, or iron (III) ammonium sulfate. More preferably, the iron (II) salt is iron (II) sulfate and the iron (III) salt is iron (III) sulfate. The concentration of iron (II) salts in the aqueous solution maybe equal to or less than 0.01 M, 0.02 M, 0.04 M, 0.06 M, 0.08 M, 0.1 M, 0.15 M, 0.20 M, 0.25 M, 0.3 M, 0.35 M, 0.40 M, 0.45 M, 0.5 M, 0.55 M, or 0.60 M or a value in the range between any two of the aforementioned values, preferably between 0.06 M and 0.1 M. The molar ratio of iron (II) salts : iron (III) may be equal to or greater than 1, 1.5, 2, 2.5, 3, 3.5, 4, 4.5, 5, or 5.5 : 1, or a value in the range between any two of the aforementioned values, preferably between 1 and 4 to 1. Preferably the ratio of iron (II) : iron (III) is between 1:1 and 4:1. The base may be any, including, but not necessarily limited to sodium hydroxide, ammonium hydroxide, potassium hydroxide, sodium nitrate, ammonium nitrate, or tetramethyl ammonium nitrate, preferably sodium hydroxide. The concentration of base in the aqueous solution may be 3 N, 3.5 N, 4 N, 4.5 N, 5 N, 5.5 N or 6 N or a value in the range between any two of the aforementioned values, preferably between 4 and 5 N. The oxidizing conditions may be typically achieved through aeration of the solution, for instance, by bubbling air or molecular oxygen there through.

In a typical process of the invention, iron (II) and iron (III) salts in the appropriate ratio and concentrations are added to water (for example deionized water) and bubbled with oxygenated gas such as air for a period of time e.g. 30, 60, 90, 120 minutes or longer. To assist the reaction, the mixture may be heated, for example, to between 80 and 95 °C, with stirring and bubbling with gas air or molecular oxygen. A base, preferably in solution is then added. The base solution, may be an aqueous solution. The base solution is preferably added dropwise over a period of time e.g. 30, 60, 90, 120 minutes. To assist with the reaction, the mixture may be heated or where already heated, the temperature maintained. After the base has been added, the mixture may be allowed to stir for a period of time e.g. 60, 90, 120, 150, 180 minutes; where heating has been used, the temperature may be maintained during this stirring period. The mixture is subsequently brought to ambient temperature, e.g. to 18 to 25 °C, preferably 20 °C and left for an overnight period e.g. 8, 10, 12, 14 hours or more. The precipitate so formed is centrifuged, the supernatant removed and replaced by water. The precipitate is resuspended in the water, and the mixture centrifuged. The cycle of resuspension and centrifugation is repeated until the pH of the supernatant is between 6.5 and 7.5, preferably 7. The compound so formed may be dried, and comprised in the solid support of the invention.

Contrary to processes described in the art which lead to pure magnetite formation when iron (II) and iron (III) salts are mixed in a precise ratio 1:2 and in a non oxidizing environment in presence of a base, the present process provides an iron oxide characterized by an X-ray diffraction spectrum which has no reflection peak at the angle located in the 21 to 28° (2 theta) range, and has only one reflection peak (111) at the angle located in the 15 to 20° (2 theta) range; and a Raman spectrum comprising a Raman spectral band centered at about $1400 \pm 4$ cm$^{-1}$, and bands present in the areas at 300-420, 430-570, 600-770 $\pm$ 4 cm$^{-1}$. The iron oxide provided by the present process, therefore, differs from the pure magnetite preparation known in the art. Compared to a pure magnetite or maghemite, the iron oxide according to the first aspect of the invention exhibits a higher avidity for bacteria and yeast.

The iron oxide according to the first and further aspects of the invention has been found by the present inventors to exhibit strong affinity for microorganisms, especially bacterial and yeast cells, that facilitates their isolation and purification from samples. It is therefore useful as a solid support for attracting microorganisms. As used herein the terms "solid support" and "iron oxide" can be synonymous and may be used interchangeably.

To aid manipulation and separation, the solid support of the invention has a magnetic property. The term "magnetic" as used herein means that the support is capable of having a magnetic moment imparted to it when placed in a magnetic field, and thus is displaceable under the action of that field. In other words, a magnetic solid support of the invention may readily be removed by magnetic aggregation, which provides a quick, simple and efficient way of separating the support following a cell binding step, and is a far less rigorous method than traditional techniques such as centrifugation which generate shear forces which may disrupt cells or degrade nucleic acids.

Thus, the magnetic solid support with cells attached may be removed onto a suitable surface by application of a magnetic field e.g. using a permanent magnet. It is usually sufficient to apply a magnet to the side of the vessel containing the sample mixture to aggregate the particles to the wall of the vessel and to pour away the remainder of the sample.

Surprisingly, the recovery rate of bacterial and yeast cells exceeds that obtained when using conventional magnetic compounds such as magnetite or gamma maghemite. The binding of the bacteria to the solid support of the invention is essentially immediate and does not require any incubation in order to achieve binding. Thus, a bacterial-solid support mixture can be rapidly (e.g. within 30 sec) isolated by a magnetic field. The unexpected finding advantageously permits highly efficient cellular extractions, that find particular application for small or dilute samples. The use of the solid support is independent of the pH and salinity of the sample, allowing thus the microorganism isolation from any sample, without addition of any binding solution. In addition, the microorganism-solid support complex is stable. The complexes so formed do not alter the viability, the division property and the enzymatic activities of the microorganism, particularly bacteria or yeast. In addition, the solid support does not release enzymatic inhibitors, allowing thus microorganism characterization by spectroscopy, enzymatic tests or by PCR. Further, the support of the invention does not bind superior eukaryotic cells such as red cells, white cells, and platelets, thus allowing microorganism isolation, particularly bacterial or fungal cells from a blood sample for instance. Moreover, the solid support of the invention does not bind non-specifically to proteins such as antibodies and can be used to remove bacteria or yeast from a sample destined for immunodetection testing.

The solid support of the invention may be employed in the isolation of bacterial and/or yeast cells from a sample. The solid support of the invention does not bind to, or shows limited binding to superior eukaryotic cells, to proteins, particularly immunoproteins, providing utility for analysis of microorganisms in protein rich samples including blood.

One embodiment of the invention is a use of iron oxide according to a first or further aspects of the invention for the isolation of microorganisms, preferably bacterial and/or yeast cells, from a sample. Another embodiment of the invention is the use of iron oxide according to a first or further aspects of the invention for removing microorganisms, preferably bacterial and/or yeast cells, from a liquid. This embodiment allows the purification of liquid.

The present invention also encompasses the use of the iron oxide according to the invention for the isolation of bacterial and/or yeast cells from a sample.

The invention is particularly suitable for selectively isolating bacteria. Effective isolation from a sample, of bacteria from some or all of the following families and genera of bacteria may be achieved using the present invention : *Aeromonas*, *Bacillus, Campylobacter, Citrobacter, Clostridium, Enterobacter, Escherichia* (pathogen and non-pathogen), *Hafnia, Klebsiella, Listeria, Proteus, Salmonella, Shewanella, Serratia, Shigella, Vibrio, Yersinia, Morganella, Photobacterium, Streptococcus, Lactococcus, Staphylococcus, Enterococcus, Leuconostoc, Pediococcus, Lactobacillus, Brochothrix.* The bacterial cells may be gram positive *(e.g. Staphylococcus aureus, Bacillus cereus)*, or gram negative *(e.g. Escherichia coli, Bordetella pertussis, Neisseria gonorrhoeae)*. The invention is especially useful for the isolation of *Staphylococcus aureus, Bacillus Cereus,* and *Escherichia coli*

The invention is also particularly suitable for selectively isolating yeast. Effective isolation from a sample, of yeast from some or all of the following yeast cells may be achieved using the present invention: mollicutes (mycoplasma and ureaplasma *e.g. Mycoplasma pneumoniae)* or chamydia *(e.g. Chlamydia trachomatis* and *Chlamydia pneumoniae)*. The invention is especially useful for the isolation of *Candida albicans.*

Preferably, said bacterial cells belong to the families or genera selected from the group comprising *Aeromonas, Bacillus, Campylobacter, Citrobacter, Clostridium, Enterobacter, Escherichia, Hafnia, Klebsiella, Listeria, Proteus, Salmonella, Shewanella, Serratia, Shigella, Vibrio, Yersinia, Morganella, Photobacterium, Streptococcus, Lactococcus, Staphylococcus, Enterococcus, Leuconostoc, Pediococcus, Lactobacillus,* and *Brochothrix,* preferably *Staphylococcus aureus, Bacillus Cereus, Escherichia coli.* Preferably, the yeast cells can *be selected from the group comprising Mycoplasma pneumoniae, Chlamydia trachomatis, Chlamydia pneumoniae* and *Candida albicans*

Preferably, use of the invention will result in a large proportion of the microorganisms *(e.g.* yeast and bacteria) present in the sample being isolated, both in terms of the proportion of all microorganisms present and the proportion of types of microorganisms. Thus, preferably at least 30%, more preferably at least 50%, most preferably at least 70, 80 or 90% of the bacteria and yeast in the sample will be bound to be solid support. Of course, the percentage of microorganisms in the sample which are bound will depend on the amount of solid support added to the sample and the ratio of solid support to microorganism. It is assumed for the above percentages that there is an excess of solid support present in the mixture.

The conditions used during the binding to microorganisms may influence the capabilities of the solid support and so the conditions used during the binding should be selected accordingly. The skilled man is capable of adjusting the binding conditions to optimize them for his needs. Appropriate buffers etc. may be used as media to achieve conditions appropriate for cellular isolation. Conveniently, a buffer of appropriate charge, osmolarity etc. may be added to the sample prior to, simultaneously with, or after contact with the solid support. Non-limiting examples of suitable solutions for performing the use, include water, acidic water, basic water, buffers such as phosphate buffered saline (PBS), Dulbecco's modified Eagle's medium (DMEM), LB medium (Lysogeny Broth), and the like. As mentioned earlier, the solid support does not require the use of a binding buffer and, therefore, simply bringing the solid support and the liquid sample into contact with each other will result in binding.

In embodiments, binding of microorganisms, particularly bacteria and yeast, may be achieved according to the invention by precipitating the cells onto the solid support using a precipitant, for example by contacting the cells with the support in the presence of alcohol and salt, *e.g.* by adding to the sample, a buffer containing alcohol and salt. The use of alcohol and salt in separation and purification procedures such as precipitation is commonplace and any suitable alcohol or salt used in such procedures, may be used according to the present invention. Thus, conveniently the alcohol may be any alkanol, and lower alkanols such as isopropanol and ethanol have been found to be suitable. Other suitable alcohols include methanol and n-butanol. The salt may be provided by any convenient source *e.g.* sodium or potassium chloride or acetate, or ammonium acetate. Appropriate concentrations of alcohol and salt may be determined according to the precise system and reagents used. Generally speaking addition of 0.5 to 3 volumes of alcohol *e.g.* 1 volume, to the sample has been found to be suitable. Conveniently the alcohol may be used at concentrations of 50-100% (w/v). The use of salt concentrations of *e.g.* 0.1 to 10.0 M, more particularly 0.1 to 7.0 M, *e.g.* 0.1 to 3,0 M has been found to be suitable, and conveniently the salt may be included, at the above concentrations in the alcohol solution. Thus, a so-called "cell-binding buffer" may be used containing the alcohol and salt at the desired concentrations. Alternatively, the salt and alcohol may be added separately. The use of alcohol as precipitant for the cells according to the invention is advantageous for use of the method in clinical diagnostic procedures, since the use of alcohol to conserve clinical samples is common. Thus, patient samples may simply be added to an alcohol-containing cell-binding buffer, whereby the samples are conserved and ready for purification of the nucleic acid. As an alternative to precipitation with salt/alcohol, other precipitants may be used, for example polyethylene glycols (PEGs) or other high molecular weight polymers with similar properties, either alone or in combination with salt and/or alcohol. The concentrations of such polymers may vary depending upon the precise system *e.g.* polymer and cell type, but generally concentrations from 1 to 50% (w/v), *e.g.* 2 to 30% may be used.

Cells with phagocytic activity may be captured by their ability to "bind" or "swallow" a particulate solid phase *e.g.* powder or beads, and thereby can readily be collected. In this case, the cell-containing sample needs simply to be contacted or incubated with the solid support under appropriate conditions. This kind of cell capture is not dependent on specific binding.

In order to investigate cell binding and where qualitative or quantitative information about specific microorganisms is required, a further processing may be performed. The combination of a general cell isolation method as described above with a species specific detection method represents a particularly preferred embodiment of the present invention.

The sample may be any material containing microorganisms, preferably bacteria and yeast, including, for example, foods and allied products, clinical and environmental samples. Representative samples thus include clinical samples taken from the human or animal body such as whole blood and blood-derived products such as plasma or buffy coat, urine, faeces, cerebrospinal fluid or any other body fluids, tissues, cell cultures, cell suspensions etc., and samples obtained by *e.g.* a swab of a body cavity. Further representative samples include environmental samples such as water samples, *e.g.* from lakes, rivers, sewage plants and other water-treatment centers or soil samples, or food samples. A preferred sample is urine, respiratory samples and plasma and other blood product components.

The invention is also of notable utility in the analysis of food samples and generally in health and hygiene applications where it is desired to monitor bacterial levels, *e.g.* in areas where food is being prepared. Milk products for example may be analyzed for listeria.

Food samples may be analyzed by first homogenizing where necessary (if a solid sample) then mixing with a suitable incubation media (*e.g.* peptone water, binding buffer) and incubating at 37 °C overnight. Food such as cheese, ice cream, eggs, margarine, fish, shrimps, chicken, beef, pork ribs, wheat flour, rolled oats, boiled rice, pepper, vegetables such as tomato, broccoli, beans, peanuts and marzipan may be analyzed in this way.

The sample may also include relatively pure or partially purified starting materials, such as semi-pure preparations obtained by other cell separation processes.

The present invention also encompasses a kit comprising an iron oxide as defined herein.

One embodiment of the invention is a kit for the isolation of bacterial and/or yeast cells comprising iron oxide according to a first or further aspects of the invention. Preferably the iron oxide is disposed in a container, or in a flow-through column. The kit conveniently provides the necessary components for processing a sample, for example without the requirement to prepare quantities of fresh stock solution which can be time consuming. Components of the kit may include one or more of the following:

- a container holder disposed with a permanent magnet configured to draw the solid support of the invention out of suspension, preferably towards a region of the wall of the container, more preferably towards a side wall of the container.

- a container in which an aliquot of a suspension of the solid support of the invention is provided.

- a syringe or Pasteur pipette for transferring liquid sample to the container.

- a container in which binding buffer is present.

- instructions for use.

- a flow through column, where the column matrix comprises the solid support of the invention.

Preferably the kit comprises a container adapted to contain a liquid mixture of the iron oxide and sample, and a magnet tube holder adapted to apply a magnetic field to a region of the wall of the container.

Another embodiment of the invention is a flow-through column for the isolation of bacterial and/or yeast cells, which column is packed with a medium formed from the iron oxide according to a first or further aspects of the invention. Flow-through columns are well known in the art, typically comprising an inlet to receive sample, and an outlet for the passage of eluant, and a quantity of medium retained in the column, which column is configured to direct liquid sample over the medium and out through the outlet. The column may have an opened-chambered inlet configured to receive a batch of sample that passes through the column by force of gravity or centrifugation. Alternatively, a Luer fitting may be provided at the inlet that can receive a syringe for the application of a liquid sample under pressure.

Another embodiment of the invention relates to a method for the isolation of microorganisms such as bacterial and/or a yeast cells from a sample, comprising the steps:

(a) contacting the sample with an iron oxide according to a first or further aspects of the invention in liquid medium;

(b) separating the iron oxide from the sample; and

(c) optionally eluting the cells from the iron oxide,

thereby isolating microorganisms such as bacterial and/or yeast cells from the sample.

The present invention also encompasses a method for removing bacteria or yeast from a liquid, comprising the steps of:

(a) contacting the liquid with an iron oxide according to a first or further aspects of the invention;

(b) separating the iron oxide from the liquid using magnetic manipulation;

thereby removing the bacterial and/or yeast cells from said liquid .

The sample is contacted with the iron oxide according to a first or further aspects of the invention, under conditions which permit binding, especially to bacterial and fungal cells. The incubation time is sufficient to permit cell capture, and is typically shorter than used in the art, being, for instance, equal to or less than 60, 45, 30, 15, 10, 5, 3, 1, 0.5, 0.2, or 0.1 minutes or a period between any two of the aforementioned value. The liquid medium may be any which provides the appropriate conditions for binding, being in particular one of the aforementioned binding buffers or may be purified water. It is noted at the same time that, advantageously, the iron oxide according to a first or further aspects of the invention does not require binding buffer to effect cell capture. Thus, the liquid medium may comprise liquid of the sample, when the sample is inherently in the liquid form (*e.g.* is urine, blood, cerebrospinal fluid etc).

The microorganisms are bound to the iron oxide and then may be separated from the remainder of the sample by removing the solid support with cells bound thereto or by removing, preferably by magnetic manipulation of the solid support-cell complex.

Elution of the captured cells from the solid support is optional; the support-bound cells may be processed directly in a PCR reaction, undergo other types of analyses, or may be propagated directly using suitable nutrient *e.g.* agar plates. Where elution is used, it involves the disruption of the interaction between the microorganism and the solid support. The skilled man would be able to devise suitable elution conditions. Typically an elution liquid will be used, which is suitable for the cells and the solid support. Optimization of the elution liquid would not be unduly burdensome. Examples of suitable elution liquids are water, mild alkalic water, acid, solvent, aqueous solutions of bovine serum albumin (BSA), and aqueous salt solutions such as sodium chloride, potassium chloride or magnesium chloride. The elution liquids may be buffered with commonly used buffers such as Tris and MOPS. Elution may be performed at room temperature but elution may be assisted by performing the elution step at an elevated temperature, such as 30-45 °C.

Optionally, one or more washing steps may be introduced into the method of the invention. In particular the support-bound cells may undergo at least one washing step after the support-bound cells have been isolated from the sample. Any solution that does not promote the elution of the cells from the solid support and does not promote the destruction of the cells may be used as a wash buffer. Generally speaking, low to moderate ionic strength buffers are preferred *e.g.* 10 mM Tris-HCl at pH 8.0/10mM NaCl. Incorporation of BSA into the washing buffer is also an option. Other standard washing media, *e.g.* containing alcohols, may also be used, if desired, for example washing with 70% ethanol. Washing solutions of 70% ethanol or PBS are preferred. Conveniently, the wash solution and the binding solution will be the same.

The eluted microorganisms can be further characterized using different techniques, such as spectrometry, for example mass spectrometry.

The DNA of the eluted cells or the separated cell-solid support complex may be amplified using an amplification technique for the detection of DNA. The cells or complexed cells are placed in a solution having appropriate levels of salts and buffers, for instance magnesium chloride for a PCR reaction. Lysis of the cells can be achieved by heating the cells or cell complex, or using any of the lysis methods described below. Detection of the target cell is achieved by the detection of sequences characteristic of the target cell using nucleic acid detection techniques typically based on the nucleic acid amplification. Many types of amplification reactions are known in the art and, as mentioned above, Polymerase chain reaction (PCR), Strand Displacement Amplification (SDA), ligation amplification reaction (LAR), self-sustained sequence replication reaction (3SR) and the Q-beta replicase amplification system are common examples. Preferred amplification methods are PCR and SDA and their modifications *e.g.* the use of nested primers and real time PCR (see *e.g.* Abramson and Myers, 1993, Current Opinion in Biotechnology, 4: 41-47 for a review of nucleic acid amplification technologies and Walker et al. 1992 Nucleic Acid Research , 20: 1691-1696 for a description of SDA).

The results of the amplification detection step may be detected or visualized by many means, which are described in the art. For example the PCR or other amplification products maybe run on an electrophoresis gel *e.g.* an ethidium bromide stained agarose gel using known techniques. Alternatively, the DIANA system may be used, which is a modification of the nested primer technique. In the DIANA (Detection of Immobilized Amplified Nucleic Acids) system (see Wahlberg et al., Mol. Cell Probes 4: 285(1990)), the inner, second pair of primers carry, respectively, means for immobilization to permit capture of amplified DNA, and a label or means for attachment of a label to permit recognition. This provides the dual advantages of a reduced background signal, and a rapid and easy means for detection of the amplified DNA.

As an alternative or in addition, the isolated cells may be identified by an immunostaining step. Generally speaking, a primary antibody, such as a monoclonal or polyclonal antibody, is directed against the microorganism either eluted from the solid support, or bound to thereto. The primary antibody may be attached to a label or recognized by a secondary labeled component. This component may be a monoclonal or polyclonal antibody or molecule able to recognize the primary antibody, such as for example, streptavidin, protein A or protein G. The label can be a fluorescent molecule, such, as for example, an FITC molecule (see examples), a chemoluminescent molecule, a radioactive molecule, or an enzyme, such as for example a peroxidase, as described in examples. DNA may be extracted from the isolated cells. Following binding, the isolated or support-bound microorganism, may be lysed to release their nucleic acid such as RNA and DNA. Methods of cell lysis are well known in the art and widely described in the literature and any of the known methods may be used. Different methods may be more appropriate for different microorganisms, but one or more of the following methods could, for example, be used for lysis: detergent lysis using *e.g.* SDS, LiDS or sarkosyl in appropriate buffers ; the use of chaotropes such as Guanidium Hydrochloride(GHCl), Guanidium thiocyanate (GTC), sodium iodide (Nal), perchlorate etc ; mechanical disruption, such as by a French press, sonication, grinding with glass beads, alumina or in liquid nitrogen ; enzymatic lysis, for example using lysozyme, proteinases, pronases or cellulases or any of the other lysis enzymes commercially available ; lysis of cells by bacteriophage or virus infection ; freeze drying ; osmotic shock ; microwave treatment ; temperature treatment ; *e.g.* by heating or boiling, or freezing, *e.g.* in dry ice or liquid nitrogen, and thawing ; alkaline lysis. As mentioned above, all such methods are standard lysis techniques and are well known in the art, and any such method or combination of methods may be used.

Conveniently, lysis may be achieved according to the present invention by using chaotropes and/or detergents. For example, in the case of bacterial cells, the combination of a chaotrope with a detergent has been found to be particularly effective. An exemplary suitable lysis agent thus includes a chaotrope such as GTC or GHCl and a detergent such as SDS or Sarkosyl. The lysis agents may be supplied in simple aqueous solution, or they may be included in a buffer solution, to form a so-called "lysis buffer". Any suitable buffer may be used, including for example Tris, Bicine, Tricine and phosphate buffers. Alternatively the lysis agents may be added separately. Suitable concentrations and amounts of lysis agents will vary according to the precise system, nature of the cells etc. and may be appropriately determined, but concentrations of *e.g.* 2M to 7M chaotropes such as GTC GHC1, Nal or perchlorate may be used, 0.1M to 1M alkaline agents such as NaOH, and 0. 1 to 50% (w/v) *e.g.* 0.5 to 15% detergent. Thus, an example of a suitable representative lysis buffer includes an aqueous solution of 4M GTC, 1% (w/v) sarkosyl.

The isolated, support-bound microorganisms, may conveniently be removed or separated from the remainder of the sample, thereby concentrating or enriching the cells. Thus the cell binding step serves to enrich the cells or to concentrate them in a smaller volume than the initial sample. Lysis then may conveniently be achieved by adding an appropriate lysis buffer containing the desired lysis agents or by subjecting the isolated cells to the desired lysis conditions. For example, in the case of simply adding a lysis buffer containing appropriate lysis agents, the isolated cells may simply be incubated in the presence of the lysis buffer for a suitable interval to allow lysis to take place. Different incubation conditions may be appropriate for different lysis systems, and are known in the art. For example for a detergent and/or chaotrope containing lysis buffer, incubation may take place at room temperature or at higher temperatures *e.g.* 37 °C or 65 °C. Likewise, time of incubation may be varied from a few minutes *e.g.* 5 or 10 minutes to hours, *e.g.* 1 to 2 hours. In the case of GTC/sarkosyl lysis buffers and bacterial cells, incubation at e.g.65 °C for 10-20 minutes may be appropriate, but this may of course be varied according to need. For enzymatic lysis, *e.g.* using proteinase K etc, longer treatment times may be required, *e.g.* overnight.

Following lysis, the released nucleic acid is conveniently bound to a solid support, for *instance* using magnetic particles able to bind DNA such as Dynabeads DNA Direct Blood beads or equivalent, or using the solid support of the invention *i.e.* the one to which the lysed microorganisms are bound to. According to an aspect of the invention, a mixed population of solid supports may be provided, some of the invention for binding to microorganisms, and others adapted to bind nucleic acid *e.g.* provided with a ligand.

This nucleic acid binding, particularly double stranded DNA binding may be achieved in any way known in the art for binding nucleic acid to a solid support. Conveniently, the nucleic acid is bound nonspecifically to the support *i.e.*

independently of sequence. Thus, for example the released nucleic acid may be precipitated onto the support using any of the known precipitants for nucleic acid, *e.g.* alcohols, alcohol/salt combinations, polyethylene glycols(PEGs) etc. Precipitation of nucleic acids onto beads in this manner is described for example in WO 91/12079. Thus, salt may be added to the support and released nucleic acid in solution, followed by addition of alcohol which will cause the nucleic acid to precipitate.

Alternatively, the salt and alcohol may be added together, or the salt may be omitted. As described above in relation to the cell binding step, any suitable alcohol or salt may be used, and appropriate amounts or concentrations may readily be determined.

Alternative non-specific nucleic acid-binding techniques include the use of detergents as described in WO 96/18731 of Dynal AS (the so-called "DNA Direct" procedure), and the use of chaotropes and a nucleic acid-binding solid phase such as silica particles as described by Akzo N. V. in EP-A-0389063. Ionic binding of the nucleic acid to the support may be achieved by using a solid support having a charged surface, for example a support coated with polyamines.

The support which is used in the method of the invention may also carry functional groups which assist in the specific or non-specific binding of nucleic acids, for example DNA binding proteins *e.g.* leucine zippers or histones or intercalating dyes (eg. ethidium bromide or Hoechst 42945) which may be coated onto the support.

Likewise, the solid support may be provided with a ligand to assist in the selective capture of nucleic acids. For example, complementary DNA or RNA sequences, or DNA binding proteins may be used, or viral proteins binding to viral nucleic acid. The attachment of such proteins to the solid support may be achieved using techniques well known in the art.

A convenient method of precipitating the nucleic acid according to the invention is by adding a precipitant, *e.g.* alcohol, to the mixture containing the support and lysed cells. Thus, an appropriate volume of alcohol, *e.g.* 100% or 96% ethanol, may simply be added to the mixture, and incubated for a time period sufficient to allow the released nucleic acid to become bound to the support. The incubation conditions for this step are not critical and may simply comprise incubating at 5-10 minutes at room temperature. However, the length of time may be varied, and temperature increased according to choice.

Although not necessary, it may be convenient to introduce one or more washing steps to the isolation method of the invention, for example following the nucleic acid binding step. Any conventional washing buffers or other media may be used. Generally speaking, low to moderate ionic strength buffers are preferred *e.g.*10 mM Tris-HC1 at pH 8.0/10mM NaCl. Other standard washing media, *e.g.* containing alcohols, may also be used, if desired, for example washing with 70% ethanol.

The use of a particulate magnetic solid support permits easy washing steps simply by aggregating the particles, removing the nucleic acid binding medium, adding the washing medium and reaggregating the particles as many times as required.

Following the nucleic acid isolation process and any optional washing steps which may be desired, the support carrying the bound nucleic acid may be transferred *e.g.* resuspended or immersed into any suitable medium *e.g.* water or low ionic strength buffer.

Depending on the support and the nature of any subsequent processing desired, it may or may not be desirable to release the nucleic acid from the support.

In the case of a particulate solid support such as magnetic or non-magnetic beads, this may in many cases be used directly, for example in PCR or other amplifications, without eluting the nucleic acid from the support. Also, for many DNA detection or identification methods elution is not necessary since although the DNA may be randomly in contact with the solid support surface and bound at a number of points by hydrogen bonding or ionic or other forces, there will generally be sufficient lengths of DNA available for hybridization to oligonucleotides and for amplification.

However, if desired, elution of the nucleic acid may readily be achieved using known means, for example by heating, *e.g.* to 70 - 90 °C for 5 to 10 minutes, following which the support may be removed from the medium leaving the nucleic acid in solution. Such heating is automatically obtained in PCR by the DNA denaturation step preceding the cycling program.

If it is desired to remove any RNA from DNA, this may be achieved by destroying the RNA before the DNA separation step, for example by addition of an RNAase or an alkali such as NaOH.

The cells isolated using the solid support may be subjected to a morphological, biochemical, enzymatic and functional analysis of bacteria or yeasts, as for example a gram coloration, a catalase, a coagulase, a galactosidase or an urease test. Alternatively or in addition, they may be subjected to an inoculation in a biochemical "ready for use" rapid test such as an API test (BioMérieux) or equivalent.

The cells isolated using the solid support may be, alternatively or in addition, subjected to an incubation in any solid or liquid, chromogenic or fluorogenic medium. Chromogenic or fluorogenic medium contains a complex composed of a substrate coupled to a colorless chromogen, that becomes colorized when its link with the substrate is cleaved by the enzymatic activity of the bacteria.

The techniques described herein may be applied to a solid medium previously solubilized in a convenient liquid medium. The method may notably be implemented in the particular case of the bioterrorism to rapidly extract and analyze hazardous microorganisms such as *Bacillus anthracis* in a suspect powder.

The methods described herein may be performed manually or automatically. In the case of automation, the invention may be assisted by the use of a liquid handling robot, such as for example the Tecan Genesis® RSP, the Biomek® 2000 (Beckman Coulter ,USA), Abbott M1000™ or equivalent or an integrated magnet station, such as, for example, Tecan's Te-MagSTM , the Dynal MPC®-auto 96, Abbott M1000™ or equivalent.

An advantage of the present invention is that it is quick and simple to perform, and the simplicity of the method allows for high throughput of samples.

The present invention also encompasses a method for removing bacteria or yeast from a liquid, thereby purifying said liquid. The present invention also encompasses a method of obtaining purified liquid, such as purified from an impure liquid source comprising the steps of: (i) contacting the impure liquid source through iron oxide particles according to a first or further aspect of the invention; and (ii) carrying out magnetic field separation of the iron oxide particles from the solution to obtain purified liquid.

It is apparent that there has been provided in accordance with the invention, a solid support that fully satisfies the objects, aims, and advantages set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as follows in the spirit and broad scope of the appended claims.

## EXAMPLES

Various embodiments of the invention are exemplified by the non-limiting examples in the sections below.

### Example 1: Preparation of iron oxide according to an embodiment of the invention: using a ratio $Fe^{2+}:Fe^{3+}$ of 1:1

#### Preparation method

A solution containing 0.36 mol iron II sulfate heptahydrate and 0.36 mol iron III sulfate hydrate in 400 ml of deionized water was bubbled 30 min with air. The mixture was heated to 85°C, continuously stirred, bubbled with air, and 1000 ml of 6 N sodium hydroxide were added dropwise over a period of 60 min. The solution was heated and bubbled 2 hours more and cooled to 20°C. After an overnight incubation, the precipitate was centrifuged, the supernatant eliminated and replaced by water. The process was repeated until the pH of the supernatant reached 7. After a last centrifugation, the iron oxide particles so formed were then placed in solution in one volume PBS and were ready to use as a solid support.

#### Characterization: Disordered cation vacancy of $\gamma$-$Fe_2O_3$ for bacteria caption

The iron oxide produced in this example was further characterized. Co-precipitation method was used to produce an iron oxide with crystallite size of about 16 nm. The crystallite size was measured using the Scherrer formula as described in B.D. Cullity, Elements of X-ray Diffraction, Addison-Wesley, Reading, MA, 1978, hereby incorporated by reference.

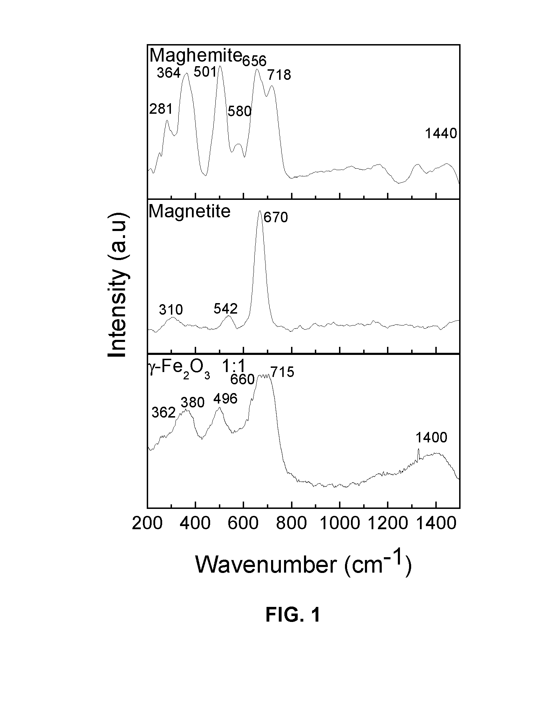

Raman spectroscopy was used to identify the iron oxide according to the invention and compare it to commercial ferri- and paramagnetic iron oxides: namely magnetite and maghemite purchased from Sigma-Aldrich. The Raman spectra were obtained from a Thermo Fisher Scientific Raman Spectrometer (model DXR). Excitation wavelengths were 633 nm. The laser power was 0.9 mW. A 50x objective lens was used with a $50\mu m$ opening and a non-confocal (slit) mode. The spectral resolution was 7-9 cm$^{-1}$. Acquisition time was 150 s and the number of scans was fixed to 5 per sample. The spectral range was between 100 cm$^{-1}$ and 1500 cm$^{-1}$. Data were processed by the Software 'OMNIC', Thermo Fisher Scientific Company, USA. The results are shown in Fig. 1.

Fig. 1 shows Raman spectra of samples. All the samples exhibit Raman scattering in the regions 300-420 cm$^{-1}$, 430-570 cm$^{-1}$, and 600-770 cm$^{-1}$. The broad bands of the oxidized samples at 1300-1550 cm$^{-1}$ are generally linked to the electronic band structure and magnetic properties of crystal grains (D. Neff, et al., J. Raman Spectrosc., 37 (2006), 1228). The fact that the appearance of a strong single peak at 670 cm$^{-1}$ and the absence of the 1300-1400 cm$^{-1}$ feature in the Raman spectrum of magnetite (Sigma-Aldrich) confirms that the sample's core of the magnetite is mainly $Fe_3O_4$, and the appearance of a broad and strong shoulder peak at 660-730 cm$^{-1}$ confirms that the cores of both maghemite (Sigma-Aldrich) and the iron oxide of the invention are $\gamma$-$Fe_2O_3$ (F. Froment, et al., J. Raman Spectrosc., 39, 2008, 560).

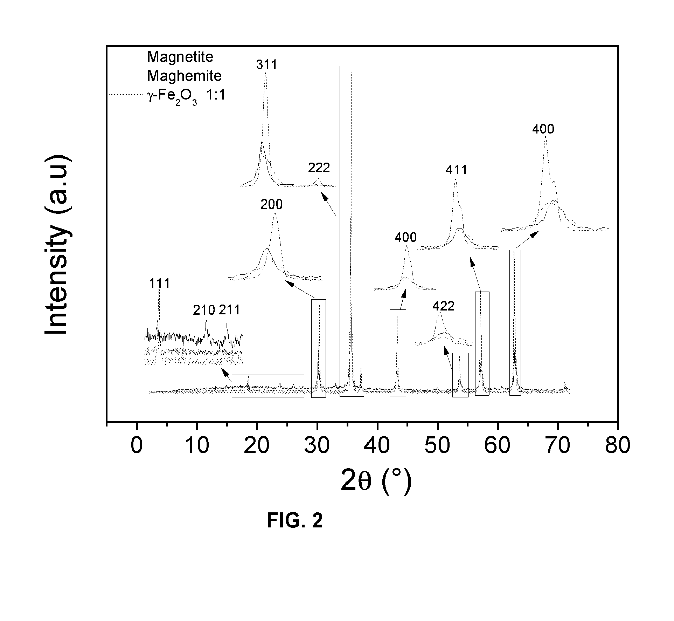

X-ray diffraction analysis was performed on the iron oxide according to the invention and compared it to commercial magnetite and maghemite purchased from Sigma-Aldrich. A Kristalloflex Siemens D 5000 diffractometer using the CuK$\alpha$ radiation $\lambda$=1,5406 Å )was used. Diffractogramms were registered for $2\theta$ values comprised between 2 and 72°, with an increasing step of 0.02° each second. The diffracted x-rays were registered by a scintillation detector. The spectra are shown in Figure 2. The spectra are shown in Figure 2. Figure 2 shows the typical XRD patterns of the iron oxide of the invention, of magnetite (Sigma-Aldrich) and maghemite (Sigma-Aldrich). According to these results, all the reflections of the XRD patterns for the maghemite (Sigma-Aldrich) shown in Figure 2 can be indexed to a cubic phase in the spinel structure. The reflections (110), (210), and (211) are characteristics of a partial vacancy ordering within the maghemite structure (M. P. Morales, et al., J. Solid State Chem. 108, (1994), 158) which gives rise to a primitive cubic lattice according to the space group $P4_132$. On the contrary, the $\gamma$-$Fe_2O_3$ of the invention shows only a (111) reflection at the low angle located between 10 and 30° (2θ). Without being bound to a theory, this result suggests that the vacancies in the $\gamma$-$Fe_2O_3$ particles of the invention are distributed randomly and belong to the space group $Fd3m$, where the only allowed reflection at a low angle is the (111), in accordance with a face-centered cubic lattice. The lattice parameter constant is equal to 0,8345 nm. This value is inferior to the one reported for the ordered maghemite (a = 0,8352 nm ; ICDD-JCPDS 39-1346). The XRD patterns of the magnetite (Sigma-Aldrich) was in accordance with the standard XRD patterns for bulk magnetite (ICDD-JCPDS 19-0629) indicating that the particles are consisting of $Fe_3O_4$ phase.

The XRD patterns showed that all products were crystallized in the spinel structure. This technical analysis highlights the order or the disorder of the cation vacancies of the $\gamma$-$Fe_2O_3$ of the invention and of the maghemite (Sigma-Aldrich).The cation vacancy disorder was observed for the $\gamma$-$Fe_2O_3$ of the invention giving only one reflection at a low angle. This feature was also confirmed through the Fourier transform infrared (FTIR) measurement (see below). The ordered cation vacancy of the maghemite (Sigma-Aldrich) exhibits well defined absorption bands, whereas the disordered cation vacancy induces an enlargement of the absorption bands.

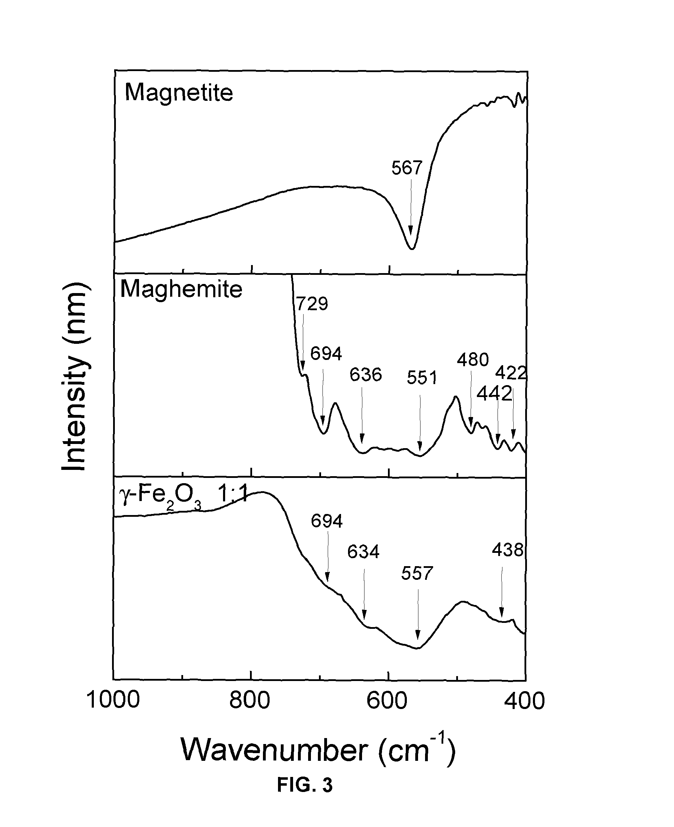

Further information concerning the vacancy distribution inside the particles of the invention was obtained by infrared spectroscopy, which has been previously shown to be very sensitive to the order-disorder characteristic of the maghemite structure (M. P. Morales, et al., J. Solid State Chem. 108, (1994), 158). FTIR measurements were performed on the iron oxide according to the invention and compared it to commercial magnetite and maghemite purchased from Sigma-Aldrich. The pellets were prepared by grinding about 5 mg of sample with about 200 mg of potassium bromide, and using a pellet forming press capable of applying a 10 tons/$cm^2$ pressure. Spectra were recorded with a Bruker Equinox 55 FT-IR spectrometer as a dry KBr pellet in the 400-1000 $cm^{-1}$ range, with a resolution of 4 $cm^{-1}$. The number of scans was fixed to 200. Before each measure, a blank spectra was obtained using a KBr pellet. The results are shown in Figure 3. Figure 3 shows the IR spectra of all samples in the 1000-400 $cm^{-1}$ region. The magnetite (Sigma-Aldrich) shows an absorption band assigned to the vibration of Fe-O in the octahedral and tetrahedral sites (~567 $cm^{-1}$). The spectrum of the maghemite (Sigma-Aldrich) shows multiple absorption bands between 800 and 400 $cm^{-1}$ (729, 694, 636, 555, 480, 442 and 422 $cm^{-1}$). These well-resolved absorption bands were due to the ordered spinel structure which exhibits a larger number of IR bands than these observed for the $\gamma$-$Fe_2O_3$ according to the invention. On the contrary, the IR spectrum of iron oxide according to the invention shows only three broad maxima at around 634, 557 and 438 $cm^{-1}$ with a shoulder around 694 $cm^{-1}$, typical of disordered $\gamma$-$Fe_2O_3$.

From these results, the iron oxide of the invention can be clearly distinguished from the magnetite as it shows a broad band at 1400 $cm^{-1}$, strong shoulder peak at 660-730 $cm^{-1}$ in Raman spectroscopy and three broad maxima at around 634, 557 and 438 $cm^{-1}$ with a shoulder around 694 $cm^{-1}$ in infrared spectroscopy while the magnetite doesn't. The crystalline nanoparticles have cores of maghemite clearly different from the maghemite purchased from Sigma-Aldrich. The co-precipitation method permits to obtain a $\gamma$-$Fe_2O_3$ with cation vacancies distributed randomly as demonstrated through the only reflection at a low angle in XRD patterns and an enlargement of the absorption bands in the infrared spectroscopy, while the maghemite (Sigma-Aldrich) presents three reflections at low angle in the XRD patterns and well-resolved absorption bands in the FTIR spectroscopy.

**Example 2: Preparation of iron oxide according to an embodiment of the invention: using a ratio $Fe^{2+}$:$Fe^{3+}$ of 2:1**

A solution containing 0.36 mol iron II sulfate heptahydrate and 0.18 mol iron III sulfate hydrate in 300 ml of deionized water was bubbled 30 min with air. The mixture was heated to 85°C, continuously stirred, bubbled with air, and 1000 ml of 6 N sodium hydroxide were added dropwise over a period of 60 min. The solution was heated and bubbled 2 hours more and cooled to 20°C. After an overnight incubation, the precipitate was centrifuged, the supernatant eliminated and replaced by water. The process was repeated until the pH of the supernatant reached 7. After a last centrifugation, the iron oxide particles so formed were then placed in solution in one volume PBS and were ready to use as a solid support.

Example 3: Preparation of iron oxide according to an embodiment of the invention: using a ratio $Fe^{2+}$:$Fe^{3+}$ of 3:1

A solution containing 0.36 mol iron II sulfate heptahydrate and 0.12 mol iron III sulfate hydrate in 250 ml of deionized water was bubbled 30 min with air. The mixture was heated to 85°C, continuously stirred, bubbled with air, and 1000 ml of 6 N sodium hydroxide were added dropwise over a period of 60 min. The solution was heated and bubbled 2 hours more and cooled to 20°C. After an overnight incubation, the precipitate was centrifuged, the supernatant eliminated and replaced by water. The process was repeated until the pH of the supernatant reached 7. After a last centrifugation, the iron oxide particles so formed was then placed in solution in one volume PBS and was ready to use as a solid support.

**Example 4: Preparation of coated iron oxide particles according to an embodiment of the invention:**

The iron oxide according to the invention was obtained as described in Example 1.

After a wash with water, the iron oxide particles were suspended in a mix of $H_2O_2/H_2O$/Ammonia 25% : 1:1:1 and heated 30 min at 80°C. After 3 washes with water, 3 washes with ethanol and 3 washes with toluene, the iron oxide particles were suspended in N-(2-aminoethyl)-3-aminopropyl-trimethoxysilane (Merk S4979172 817) (diluted in 1% toluene). After an overnight incubation, the coated iron oxide particles were washed 3 times with toluene, 3 times with ethanol and 3 times with water. N-(2-aminoethyl)-3-aminopropyl-trimethoxysilane coated iron oxide was thereby obtained. The coated iron oxide particles were finally resuspended in one volume of PBS.

Trimethoxy-methylsilan coated iron oxide; 3-(Chloropropyl)-trimethoxy-silane coated iron oxide; and 3-(2,3-Epoxypropoxy)-propyl)-tri-methoxysilane coated iron oxide were similarly obtained using the above mentioned method by replacing N-(2-aminoethyl)-3-aminopropyl-trimethoxysilane, with Trimethoxy-methylsilan (Merck S4794378 005); 3-(Chloropropyl)-trimethoxy-silane (Merck S5138916 031); and 3-(2,3-Epoxypropoxy)-propyl)-tri-methoxysilane (Merck: S4337307 028) respectively.

**Example 5: Use of coated or uncoated iron oxide particles for isolating microorganisms.**

Iron oxides particles according to the invention prepared as described in examples 1 to 4 were tested as solid support for isolating microorganism from samples.

Magnetite and gamma maghemite were tested as comparative examples. 99.9% Pure magnetite was obtained from Aldrich (ref: 518158). It was placed in solution in one volume PBS and directly used as a solid support. Gamma maghemite was obtained by heating pure magnetite (Aldrich ref. 518158) during 3 hours at 250°C in air, according to Garcell (1998). It was then placed in solution in one volume PBS and was ready to use as a solid support.

Silane coated magnetite was also tested as comparative example. The coated magnetite was prepared by using pure magnetite Aldrich (ref: 518158). The magnetite was suspended in a mix of $H_2O_2/H_2O$/Ammonia 25% : 1:1:1 and heated 30 min at 80°C. After 3 washes with water, 3 washes with ethanol and 3 washes with toluene, the magnetite was suspended in N-(2-aminoethyl)-3-aminopropyl-trimethoxysilan (Merck S4979172 817) (diluted in 1% toluene). After an overnight incubation, the coated magnetite was washed 3 times with toluene, 3 times with ethanol and 3 times with water. The coated magnetite was finally resuspended in one volume of PBS.

Bacterial or yeast cells were diluted in 1 ml sterile PBS pH 7. 200 µl were aseptically pipetted and dispensed in a 1.5 ml Eppendorf tube into which 5 µl of different iron oxides particles prepared as described above were added. After a 30 s incubation, the tube was placed into a magnet device (Ademtech Magnetic Device Adem-Mag MSV catalog 20104).

After a 30 s incubation, to let the cellular-solid support complexes move to the side of the tube facing the magnet, the supernatant was aseptically pipetted out and displayed on a Petri dish filled with LB agar medium which constituted the "dish 1".

The tube was removed from the magnet, the magnetic particle pellet resuspended in 200 µl sterile PBS and also displayed on a Petri dish, which constituted the "dish 2".

After a one night culture at 37°C, colonies were counted. The percentage of recovery was measured as follows:

$$Percentage\ of\ recovery = Bacteria\ counted\ on\ dish\ 2 / bacteria\ counted\ on\ dish\ 1+2.$$

The results are shown in Table 1 for the isolation of Gram positive *Staphylococcus aureus*.

Table 1

| Solid support added | Dish 1 | Dish 2 | Percentage of recovery |
|---|---|---|---|
| Iron oxide example 1 | 2 | 130 | 98% |
| Iron oxide example 2 | 30 | 120 | 80% |
| Iron oxide example 3 | 22 | 131 | 85% |

(continued)

| Solid support added | Dish 1 | Dish 2 | Percentage of recovery |
|---|---|---|---|
| Iron oxide example 4: coated with N-(2-aminoethyl)-3-aminopropyl-trimethoxysilan | 17 | 150 | 89% |
| Magnetite | 72 | 87 | 52% |
| Gamma maghemite | 75 | 55 | 42% |
| Magnetite coated with N-(2-aminoethyl)-3-aminopropyl-trimethoxysilan | 72 | 61 | 45% |
| None (control) | 140 | 0 | |

The results are shown in Table 2 for the isolation of Gram positive *Bacillus Cereus.*

Table 2

| Solid support added | Dish 1 | Dish 2 | Percentage of recovery |
|---|---|---|---|
| Iron oxide example 1 | 11 | 200 | 95% |
| Iron oxide example 2 | 21 | 205 | 90% |
| Iron oxide example 3 | 27 | 184 | 87% |
| Iron oxide example 4: coated with N-(2-aminoethyl)-3-aminopropyl-trimethoxysilan | 51 | 198 | 79% |
| Magnetite | 92 | 91 | 49% |
| Gamma maghemite | 108 | 89 | 45% |
| Magnetite coated with N-(2-aminoethyl)-3-aminopropyl-trimethoxysilan | 154 | 48 | 23% |
| None (control) | 220 | 1 | |

The results are shown in Table 3 for the isolation of Gram negative *Escherichia coli.*

Table 3

| Solid support added | Dish 1 | Dish 2 | Percentage of recovery |
|---|---|---|---|
| Iron oxide example 1 | 68 | 71 | 51% |
| Iron oxide example 2 | 70 | 68 | 49% |
| Iron oxide example 3 | 5 | 131 | 53% |
| Iron oxide example 4: coated with N-(2-aminoethyl)-3-aminopropyl-trimethoxysilan | 10 | 135 | 93% |
| Magnetite | 95 | 31 | 25% |
| Gamma maghemite | 100 | 35 | 26% |
| Magnetite coated with N-(2-aminoethyl)-3-aminopropyl-trimethoxysilan | 102 | 84 | 45% |
| None (control) | 143 | 1 | |

The results are shown in Table 4 for the isolation of positive *Staphylococcus aureus* with uncoated iron oxide, or iron oxide coated with different silane.

Table 4

| Solid support added | Dish 1 | Dish 2 | Percentage of recovery |
|---|---|---|---|
| Iron oxide example 1 | 50 | 17 | 25% |
| Iron oxide example 4: coated with Trimethoxy-methylsilan | 52 | 22 | 29% |
| Iron oxide example 4: coated with 3-(Chloropropyl)-trimethoxy-silane | 29 | 44 | 60% |
| Iron oxide example 4: coated with 3-(2,3-Epoxypropoxy)-propyl)-tri-methoxysilane | 50 | 2 | 1% |
| Iron oxide example 4: coated with N-(2-aminoethyl)-3-aminopropyl-trimethoxysilan | 9 | 60 | 87% |
| None (control) | 71 | 0 | |

The results are shown in Table 5 for the isolation of *Candida albicans* (yeast)

Table 5

| Solid support added | Dish 1 | Dish 2 | Percentage of recovery |
|---|---|---|---|
| Iron oxide example 1 | 0 | 60 | 100% |
| Iron oxide example 2 | 0 | 79 | 100% |
| Iron oxide example 3 | 5 | 131 | 96% |
| Iron oxide example 4: coated with N-(2-aminoethyl)-3-aminopropyl-trimethoxysilan | 9 | 60 | 86% |
| Magnetite | 16 | 58 | 78% |
| Gamma maghemite | 18 | 61 | 77% |
| Magnetite coated with N-(2-aminoethyl)-3-aminopropyl-trimethoxysilan | 28 | 30 | 52% |
| None (control) | 64 | 0 | |

The experiment was repeated more than 10 times with a similar result, showing that:

> i) the iron oxide of the invention permits the isolation of bacteria and yeast from a liquid medium more rapidly and with more efficiency than magnetite or maghemite alone;

> ii) the yeast and bacteria trapped by the complex remain alive and able to reform colonies;

> iii) the coating with N-(2-aminoethyl)-3-aminopropyl-trimethoxysilan weakly decreases the binding for gram positive bacteria and yeast, but increases the binding for gram negative bacteria, whereas complex coated with silane exhibiting no $NH_2$ groups (amino silane) are less efficient.

This experiment was also repeated with the iron oxide according to the invention on human peripheral blood leucocytes and on *Trypanosoma cruzi* and no binding was observed, demonstrating thus the specificity of the complex for bacteria and yeasts.

This experiment was repeated with the iron oxide of example 1 on *Staphylococcus aureus* suspended in various liquid media with a similar result. The media tested were PBS, liquid LB bacterial culture medium, DMEM+ 10% fetal calf serum, human serum, human heparinized blood and hemoculture medium (BACTEC plus+ Anaerobic/F. Becton Dickinson), pure water at pH7, water acidified with HCl with a pH range varying from 3 to 7 and water alkalinized with NaOH with a pH range varying from 7 to 10.

**Example 6: Experiment demonstrating the capacity of the iron oxide of the invention and stability of the binding with bacteria**

10 μl of the iron oxide particles of example 1 were added to 1 ml of a *Staphylococcus aureus* culture in LB medium at the end of the exponential phase. After a 1 minute incubation, the tube was placed into the magnet device. In a third step, after a 1 minute incubation, to let the bacteria-solid support complex move to the side of the tube facing the magnet, medium was aseptically pipetted and replaced by 1ml sterile PBS.

The third step was repeated three times to perfectly wash the sample. 200 $\mu$l of the last washing solution were displayed on a Petri dish filled with LB agar medium which constituted the "dish 1".

The tube was removed from the magnet, the bacteria-solid support complex resuspended in 200 $\mu$l sterile PBS and then diluted about 10000 times with PBS, as described herein: the 200 $\mu$l were added in a first tube containing 2ml PBS, 200 $\mu$l were taken and added to a second 2ml containing tube, 200 $\mu$l were taken and added to a third 2ml containing tube, 200 $\mu$l were taken and added to a fourth 2ml containing tube. 200 $\mu$l of this last dilution were plated on a Petri dish filled with LB agar medium which constituted the "dish 2". After a one night culture at 37°C, colonies were counted. The results are shown in Table 6.

Table 6

| Solid support added | Dish 1 | Dish 2 |
|---|---|---|
| Iron oxide example 1 | 8 | 211 |

From this experiment it can be seen that:

i) one microliter of the solid support is able to bind about 20 x $10^4$ bacteria.

ii) the solid support releases poorly the bound bacteria under binding conditions.

The third step was also repeated using various washing buffers and gave similar results.

The buffers used were pure water at pH 7, water acidified with HCl or alkalinized with NaOH with a range of pH varying from 3 to 10, 1M NaCl in water, 1M glucose in water, olive oil.

The inventors have shown that the binding of the bacteria to the solid support of the invention is stable and cannot be disrupted using the most common buffers.

One milliliter of iron oxide particles was air dried at 37°C to obtain powder. The weight of this powder was 0.280 mg. The capacity of the particles expressed in weight was :1 $\mu$g of particles binds about $10^6$ bacteria.

This powder could be then easily resuspended in PBS and could be again used as described above.

**Example 7: Direct analysis of isolated bacteria through mass spectrometry Maldi-TOF MS *(Matrix-Assisted Laser Desorption/Ionization- time-of-flight mass***

***spectrometry)* (Bruker Daltonics MALDI Biotyper)**

In a first step, *E. coli* were diluted in heparinized blood at $10^8$ CFU/ml. In a second step, a tube was filled with 1ml of this suspension. Subsequently 10 $\mu$l of iron oxide particles of example 1 were added into the tube. In a fourth step, after a 1 minute incubation, the tube was placed into the magnet device. After a 1 minute incubation, to let the bacteria-solid support complex move to the side of the tube facing the magnet, blood was removed with a pipette and replaced by 1 ml water. The fourth step was repeated 2 times.

After removing water, 30 $\mu$l of formic acid was added for a 5 min incubation. 30 $\mu$l of acetonitrile was then added for a further 15 min incubation. The tube was then placed into the magnet device, 1 $\mu$l of supernatant was taken, applied on the Maldi-Tof plate and air dried. 1$\mu$l of the matrix ( purchased by Bruker) was added on the plate and air dried. The plate was then placed in the Maldi-TOF MS and analyzed.

The spectra given by the Maldi-TOF identified the organism as *E. Coli* with a good score.

The experiment was repeated with *E. coli* diluted in various media including water, urine, or hemoculture, and gave similar results.

The experiment was repeated with various bacteria or yeast and gave similar results.

**Claims**

1. Iron oxide **characterized by**:

an X-ray diffraction pattern which has no reflection peak at the angle located in the 21 to 28° (2 theta) range, and has only one reflection peak (111) at the angle located in the 15 to 20° (2 theta) range; and a Raman spectrum comprising a Raman spectral band centered at about $1400 \pm 4$ cm$^{-1}$ , and bands present in the areas at 300-420, 430-570, 600-770 $\pm$ 4 cm$^{-1}$.

2.  The iron oxide according to claim 1, wherein said iron oxide is $Fe_2O_3$, preferably gamma-$Fe_2O_3$.

3.  The iron oxide according to claim 1 or 2, obtained by a process comprising the steps of : reacting iron (II) salt with iron (III) salt, in an aqueous solvent, in the presence of air or molecular oxygen, and subsequently adding a base to the reaction mixture, in the presence of air or molecular oxygen, and isolating the iron oxide formed.

4.  The iron oxide according to claim 3, wherein the wherein the ratio of iron (II) : iron (III) is between 1:1 and 4:1.

5.  The iron oxide according to claim 3 or 4, wherein the iron (II) salt is selected from iron (II) sulfate, iron (II) chloride, or iron (II) ammonium sulfate, and the iron (III) salt is selected from iron (III) sulfate, iron (III) chloride, iron (III) nitrate, or iron (III) ammonium sulfate.

6.  The iron oxide according to any of claims 3 to 5, wherein the iron (II) salt is iron (II) sulfate and the iron (III) salt is iron (III) sulfate.

7.  The iron oxide according to any of claims 3 to 6, wherein the base is selected from the group comprising sodium hydroxide, ammonium hydroxide, potassium hydroxide, sodium nitrate, ammonium nitrate, or tetramethyl ammonium nitrate, and preferably sodium hydroxide.

8.  The iron oxide according to any of claims 1 to 7, coated with a silane compound.

9.  The iron oxide according to any of claims 1 to 8 to which a ligand such an antibody, streptavidin, or biotin is immobilized.

10. Use of a iron oxide according to any of claims 1 to 9 for the isolation of bacterial and/or yeast cells from a sample.

11. Use according to claim 10, wherein said bacterial cells belong to any families or genera: *Aeromonas, Bacillus, Campylobacter, Citrobacter, Clostridium, Enterobacter, Escherichia, Hafnia, Klebsiella, Listeria, Proteus, Salmonella, Shewanella, Serratia, Shigella, Vibrio, Yersinia, Morganella, Photobacterium, Streptococcus, Lactococcus, Staphylococcus, Enterococcus, Leuconostoc, Pediococcus, Lactobacillus, Brochothrix,* preferably *Staphylococcus aureus, Bacillus Cereus, Escherichia coli,* and the yeast cells are *Mycoplasma pneumoniae, Chlamydia trachomatis, Chlamydia pneumoniae* or *Candida albicans.*

12. A kit comprising an iron oxide as defined in any of claims 1 to 9.

13. Kit according to claim 12, further comprising a container adapted to contain a liquid mixture of the iron oxide and sample, and a magnet tube holder adapted to apply a magnetic field to a region of the wall of the container.

14. A method for the isolation of bacterial and/or yeast cells from a sample, comprising the steps:

    (a) contacting the sample with an iron oxide according to any of claims 1 to 9 in liquid medium;
    (b) separating the iron oxide from the sample using magnetic manipulation; and
    (c) optionally eluting the cells from the iron oxide,

    thereby isolating the bacterial and/or yeast cells from a sample.

15. A method for removing bacteria or yeast from a liquid, comprising the steps of:

    (a) contacting the liquid with an iron oxide according to any of claims 1 to 9;
    (b) separating the iron oxide from the liquid using magnetic manipulation;

    thereby removing the bacterial and/or yeast cells from said liquid.

FIG. 1

FIG. 2

FIG. 3

Europäisches
Patentamt

European
Patent Office

Office européen
des brevets

## EUROPEAN SEARCH REPORT

Application Number

EP 11 17 4061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 198 59 687 A1 (BAYER AG [DE]; INST NEUE MAT GEMEIN GMBH [DE]) 29 June 2000 (2000-06-29) * claim 1; examples 1,2 * | 1-15 | INV. C01G49/06 |
| A | EP 0 422 755 A1 (TODA KOGYO CORP [JP]) 17 April 1991 (1991-04-17) * claim 5; figure 2; example 1 * | 1-15 | |
| A | M.P. MORALES ET AL: "Structural Characteristics of Uniform [gamma]-Fe2O3 Particles with Different Axial (Length/Width) Ratios", JOURNAL OF SOLID STATE CHEMISTRY, vol. 108, no. 1, 1 January 1994 (1994-01-01), pages 158-163, XP55014366, ISSN: 0022-4596, DOI: 10.1006/jssc.1994.1024 * figures 2,3 * | 1-15 | |
| A | BARALE M ET AL: "PURITY OF COLLOIDAL MAGNETITE PARTICLES USED AS A MODEL CORROSION PRODUCT", CORROSION, NACE INTERNATIONAL, HOUSTON, TX; US, US, vol. 63, no. 8, 1 August 2007 (2007-08-01), pages 744-748, XP001506395, ISSN: 0010-9312 * figure 2 * | 1-15 | TECHNICAL FIELDS SEARCHED (IPC) C01G |

The present search report has been drawn up for all claims

| Place of search | Date of completion of the search | Examiner |
|---|---|---|
| The Hague | 9 December 2011 | Siebel, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.** EP 11 17 4061

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2011

| Patent document cited in search report | | Publication date | Patent family member(s) | | Publication date |
|---|---|---|---|---|---|
| DE 19859687 | A1 | 29-06-2000 | NONE | | |
| EP 0422755 | A1 | 17-04-1991 | DE | 69010299 D1 | 04-08-1994 |
| | | | DE | 69010299 T2 | 13-10-1994 |
| | | | EP | 0422755 A1 | 17-04-1991 |
| | | | JP | 2736691 B2 | 02-04-1998 |
| | | | JP | 3126626 A | 29-05-1991 |
| | | | US | 5093100 A | 03-03-1992 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9112079 A
- WO 9618731 A
- EP 0389063 A

**Non-patent literature cited in the description**

- **ABRAMSON ; MYERS.** *Current Opinion in Biotechnology,* 1993, vol. 4, 41-47
- **WALKER et al.** *Nucleic Acid Research,* 1992, vol. 20, 1691-1696
- **WAHLBERG et al.** *Mol. Cell Probes,* 1990, vol. 4, 285
- **B.D. CULLITY.** Elements of X-ray Diffraction. Addison-Wesley, 1978
- **D. NEFF et al.** *J. Raman Spectrosc.,* 2006, vol. 37, 1228
- **F. FROMENT et al.** *J. Raman Spectrosc.,* 2008, vol. 39, 560
- **M. P. MORALES et al.** *J. Solid State Chem.,* 1994, vol. 108, 158